# EUROPÄISCHE PATENTSCHRIFT

(11) **EP 0 362 736 B1**
(45) Veröffentlichungstag und Bekanntmachung des Hinweises auf die Patenterteilung: **05.01.1994**
(21) Anmeldenummer: 89118156.2
(22) Anmeldetag: 30.09.1989
(51) Int. Cl.: G01N 27/406

(54) **Sauerstoffsonde für einen Wärmebehandlungsofen**
Oxygen probe for a heat treatment oven
Sonde d'oxygène pour un four à traitement calorifique

(30) Priorität: 06.10.1988 DE 3833968
(43) Veröffentlichungstag der Anmeldung: 11.04.1990
(73) Patentinhaber: IPSEN INDUSTRIES INTERNATIONAL GESELLSCHAFT MIT BESCHRÄNKTER HAFTUNG, D-47533 Kleve (DE)
(72) Erfinder: Göhring, Werner, D-4190 Kleve (DE); Roggatz, Max, D-4180 Goch-Nierswalde (DE); Edenhofer, Bernd, Dr., D-4190 Kleve (DE)
(74) Vertreter: Stenger, Watzke & Ring Patentanwälte

(56) Entgegenhaltungen:
- EP-A- 0 089 052
- EP-A- 0 117 230
- DE-A- 2 941 056
- DE-A- 3 320 608
- DE-U- 8 812 566
- FR-A- 2 310 614
- FR-A- 2 565 692

## Beschreibung

Die Erfindung betrifft eine Sonde zur Messung des Sauerstoffpotentials einer Ofenatmosphäre, insbesondere zur Ermittlung der Kohlenstoff-Übertragungseigenschaften einer Ofenatmosphäre mit Anteilen der Gase H₂, CO und CH₄, die einen Sauerstoffionen leitenden festen Meßelektrolyten mit einer Kontaktelektrode in der Ofenatmosphäre und einer Kontaktelektrode in einem Referenzmittel mit bekanntem Sauerstoffpotential aufweist.

Eine derartige Sonde ist bekannt, beispielsweise aus der FR-A-2 565 692 oder der FR-A-2 310 614. Sie besteht aus einem Sauerstoffionen leitenden Festkörperelektrolyt, insbesondere Zirkondioxid, dessen eine Wandseite mit der Ofenatmosphäre und dessen andere Wandseite mit dem Referenzmittel bekannten Sauerstoffpotentials - meist Luft - in Berührung steht. An den beiden Oberflächen der Wand bilden sich entsprechend der unterschiedlichen Sauerstoffpotentiale der Ofenatmosphäre einerseits und des Referenzmittels andererseits verschiedene Konzentrationen an Sauerstoffatomen, Sauerstoffionen und Elektronen. Diese sind als elektrische Spannung meßbar, welche somit den Unterschied der beiden Sauerstoffpotentiale repräsentiert. Die Spannung wird mit elektronenleitenden Kontaktelektroden abgegriffen, die mit der jeweiligen Wand des Meßelektrolyten in Berührung stehen.

Sauerstoffsonden der oben beschriebenen Art werden häufig zur Regelung des Kohlenstoff-Pegels (C-Pegel) von Aufkohlungsatmosphären in Wärmebehandlungsöfen angewandt. Derartige Aufkohlungsatmosphären bestehen hauptsächlich aus den Gasen Kohlenmonoxid CO, Wasserstoff H₂ und Stickstoff N₂ mit mehr oder weniger großen Anteilen an Kohlenwasserstoffen, vorwiegend CH₄. Je höher der Anteil an CH₄ in der Ofenatmosphäre ist, desto einfacher und wirtschaftlicher ist deren Herstellung und desto größer ist die erzielbare Kohlenstoffübertragungsrate aus der Ofenatmosphäre auf die Werkstückoberfläche. Aus dem Meßwert der mit der Ofenatmosphäre in Verbindung stehenden Sauerstoffsonde, dem CO-Gehalt der Ofenatmosphäre und der Ofenraumtemperatur kann zur Regelung der Aufkohlung der C-Pegel der Ofenatmosphäre berechnet werden. Wesentlich für die einwandfreie Funktion der Sauerstoffsonde im beschriebenen Sinne ist, daß die mit der Ofenatmosphäre im Ofenraum in Berührung stehende Kontaktelektrode mindestens an der Berührungsstelle zum Meßelektrolyten aus einem elektrisch leitenden Element ausgeführt ist, welches auf einen CH₄-Zerfall nicht katalytisch wirkt. Als derartige nicht katalytisch auf den CH₄-Zerfall wirkende Werkstoffe sind die Metalle Kupfer, Silber, Gold oder Palladium bekannt. Nachteiligerweise hat sich dennoch gezeigt, daß auch bei der Anwendung vorstehender Werkstoffe als Kontaktelektrode in der Ofenatmosphäre ein Driften des erhaltenen Meßwertes zu einer immer höheren Anzeige eintreten kann, wodurch Fehler in der Regelung des Kohlenstoff-Pegels der Ofenatmosphäre zu befürchten sind.

Die Berührungsflächen zwischen dem Meßelektrolyt einerseits und der Kontaktelektrode Ofenatmosphäre bzw. Referenzatmosphäre andererseits, an denen die unterschiedlichen Sauerstoffpotentiale abgegriffen werden, sind wegen einer auftretenden Elektrodenreaktion selbst dann für das Meßergebnis kritisch, wenn die Kontaktelektroden aus einem auf den CH₄-Zerfall nicht katalytisch wirkenden Werkstoff hergestellt sind.

Wie oben beschrieben, ist das zu messende Sauerstoffpotential durch die Konzentrationen von Sauerstoffatomen, Sauerstoffionen und Elektronen an der Meßstelle gekennzeichnet. Eine genaue Messung setzt daher voraus, daß durch den Meßvorgang die Gleichgewichtskonzentrationen zwischen Meßstelle und umgebender Atmosphäre nicht gestört werden. Eine solche Störung liegt vor, wenn durch eine starke Reaktion der aus dem Elektrolyt austretenden Sauerstoffionen mit der Ofenatmosphäre (Elektrodenreaktion) mehr Sauerstoffionen aus dem Meßelektrolyt ausgebaut werden, als an der Referenzluftseite in den Elektrolyt eingebaut werden können. Dann wird an der Ofenelektrode das Sauerstoffpotential tiefer als in der umgebenden Ofenatmosphäre. Im Hinblick auf das Meßergebnis ist damit das gemessene Sauerstoffpotential zu tief. Bei den bekannten Sauerstoffsonden kann das vorbeschriebene Gleichgewicht zwischen der Meßstelle an der Ofenelektrode und der umgebenden Ofenatmosphäre nur bis zu einer gewissen Stärke der Elektrodenreaktion aufrechterhalten werden. Je höher die Ofentemperatur und je höher der C-Pegel ansteigt, um so stärker wird die Elektrodenreaktion und um so ungenauer die Messung.

Die Ursache des vorbeschriebenen Driftens des Meßwertes ist darin zu sehen, daß im Laufe der Zeit durch eine immer besser werdende Kontaktbindung zwischen Elektrode und Elektrolyt die Elektrodenreaktion nachteiligerweise immer stärker wird.

Der Erfindung liegt die **Aufgabe** zugrunde, die Sauerstoffsonde der eingangs genannten Art derart zu verbessern, daß Meßfehler, insbesondere ein Driften des Meßwertes zu erhöhter Sondenspannung, vermieden oder zumindest verringert werden und damit eine Sauerstoffsonde zu schaffen, die sich durch eine verbesserte Meßgenauigkeit auszeichnet und einen Meßwert bereitstellt, der die Triebkraft der Stoffübertragung von der Ofenatmosphäre auf die Oberfläche der Werkstücke repräsentiert. Die oben genannten Nachteile sollen vermieden werden. Insbesondere ist es ein Ziel der Erfindung, eine Sonde zu entwickeln, mit der das Sauerstoffpotential von im Ofenraum eines Wärmebehandlungsofens erzeugten Atmosphären mit hoher Aufkohlungsgeschwindigkeit auch im Dauerbetrieb fehlerfrei gemessen werden kann.

Die Aufgabe ist erfindungsgemäß dadurch gelöst, daß zwischen der Kontaktelektrode in der Ofenatmosphäre und dem Meßelektrolyten ein Sauerstoffionen leitender Ausgleichselektrolyt in Form eines separaten festen Körpers angeordnet ist, der in Berührung steht mit dem Meßelektrolyten einerseits und der Kontaktelektrode andererseits und der aus einem Sauerstoffionen leitenden Werkstoff besteht, so daß er Sauerstoffionen aus der umgebenden Ofenatmosphäre in dem Maße aufnimmt, wie sie durch eine Elektrodenreaktion ausgebaut werden.

Vorzugsweise handelt es sich um einen ausschließlich Sauerstoffionen leitenden Ausgleichselektrolyten, der eine gemeinsame Berührungsstelle Meßelektrolyt-Ausgleichselektrolyt-Ofenatmosphäre aufweist. Durch diesen Ausgleichselektrolyt entfällt die nach dem Stand der Technik übliche Berührungsstelle der elektronenleitenden Kontaktelektrode in der Ofenatmosphäre mit dem Meßelektrolyt. Stattdessen werden Sauerstoffionen von der gemeinsamen Berührungsstelle Meßelektrolyt-Ofenatmosphäre-Ausgleichselektrolyt innerhalb des Ausgleichselektrolyten zur elektronenleitenden Meßstelle weitergeleitet.

In den Ausgleichselektrolyt können im Gegensatz zu dem Meßelektrolyt Sauerstoffionen aus der umgebenden Ofenatmosphäre eintreten. Daher nimmt der Ausgleichselektrolyt in dem Maße Sauerstoffionen aus der Umgebung auf, wie sie durch die Elektrodenreaktion wieder ausgebaut werden. Die erfindungsgemäße Anordnung des Ausgleichselektrolyten als separater fester Körper zwischen dem Meßelektrolyten und der Kontaktelektrode entlastet daher den Meßelektrolyten von den Konzentrationsänderungen der Atome, Ionen oder Elektronen, die ohne diesen durch die Elektrodenreaktion verursacht werden würden. Eine durch die Stärke der Elektrodenreaktion unbeeinflußte Messung des Sauerstoffpotentials ist daher möglich.

Gemäß einer zweckmäßigen Ausgestaltung der Erfindung wird zusätzlich an der Referenzseite des Meßelektrolyten zwischen der dortigen elektronenleitenden Kontaktelektrode und dem Meßelektrolyt ein weiterer ausschließlich Sauerstoffionen leitender Ausgleichselektrolyt angeordnet, der eine gemeinsame Berührungsstelle Meßelektrolyt-Ausgleichselektrolyt-Referenzmittel aufweist und in prinzipiell gleicher Weise wie der vorbeschriebene Ausgleichselektrolyt in der Ofenatmosphäre arbeitet. Mit ihm wird erreicht, daß auch eine erhöhte Sauerstoffionenkonzentration ausgeglichen werden kann. Dies ist vor allem von Vorteil bei Ofenatmosphären in Betriebszuständen mit geringem Ionendurchsatz, beispielsweise bei niedriger Ofentemperatur oder hohem Sauerstoffpotential. Hierbei kann der Ionenverbrauch an der Meßstelle in der Ofenatmosphäre geringer werden, als die Ionenproduktion an der Meßstelle auf der Referenzseite. Die Anwendung eines zusätzlichen Ausgleichselektrolyten verhindert dann eine Fehlmeßung in Form von Überspannungen.

Der Ausgleichselektrolyt kann ein kubischer oder zylindrischer Körper aus ZrO₂ sein, vorzugsweise in Form eines Zylinderabschnitts des rohrförmigen Meßelektrolyten.

Vorzugsweise ist die elektronenleitende Kontaktelektrode in der Ofenatmosphäre aus Gold oder besteht aus einer überwiegend Gold enthaltenden Platinmetall-Legierung. Alternativ kann die elektronenleitende Kontaktelektrode in der Ofenatmosphäre auch aus einem Halbleiter, z.B. Siliziumcarbid, bestehen. Als Material für die elektronenleitende Kontaktelektrode im Referenzmittel wird vorzugsweise ein hitzebeständiger Chrom-Nickelstahl verwendet.

Weitere Einzelheiten, Merkmale und Vorteile des Gegenstandes der Erfindung ergeben sich aus der nachfolgenden Beschreibung der zugehörigen Zeichnung, in der eine Sauerstoffsonde gemäß der Erfindung schematisch im Vergleich zu einer Sauerstoffsonde des Standes der Technik dargestellt ist. In der Zeichnung zeigt:
- Fig. 1: eine erfindungsgemäße Sauerstoffsonde, schematisch im Schnitt,
- Fig. 2: eine weitere Ausführungsform einer Sauerstoffsonde gemäß der Erfindung schematisch im Schnitt und
- Fig. 3: eine Sauerstoffsonde gemäß der Erfindung in einer dritten Ausgestaltung schematisch im Schnitt.

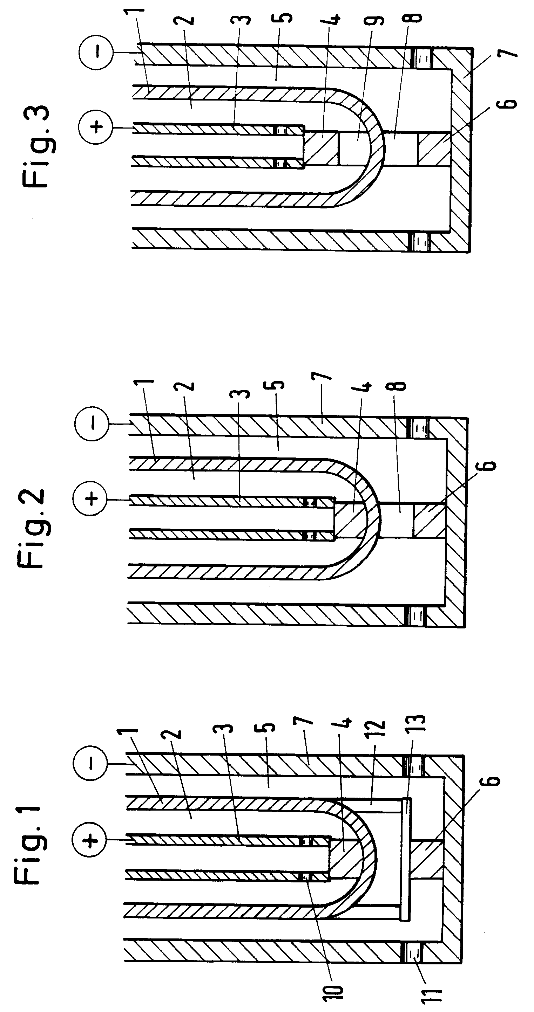

Die in Fig. 1 der Zeichnung dargestellte Sauerstoffsonde besteht aus einem einseitig geschlossenen Rohr 1, welches ein ausschließlich Sauerstoffionen leitender Festelektrolyt, insbesondere aus stabilisiertem Zirkondioxid, ist. Innerhalb des rohrförmigen Festelektrolyten 1 ist ein Rohr 3 aus einem hitzebeständigen elektronenleitenden Werkstoff angeordnet, durch welches Luft 2 als Referenzmittel mit der inneren Oberfläche des Festelektrolyten 1 in Berührung gebracht wird. Das Luftzuführungsrohr 3 ist zugleich als Leiter zum Abgriff der an der elektronenleitenden Kontaktelektrode 4, auch Innenelektrode genannt, entstehenden Spannung ausgebildet. Zu diesem Zweck steht das Rohr 3 endseitig mit der Innenelektrode 4 in Berührung, wobei Querbohrungen 10 für den Luftdurchlaß zur Innenoberfläche des Festelektrolyten 1 vorgesehen sind.

Der Festelektrolyt 1 ist außen umgeben von einem Schutzrohr 7, das aus einem hitzebeständigen, elektronenleitenden Werkstoff besteht. Es ist endseitig geschlossen und weist Querbohrungen 11 zur Ofenatmosphäre 5 hin auf. Hierdurch steht die Außenoberfläche des Festelektrolyten 1 ständig mit der Ofenatmosphäre 5 in Verbindung. An einer elektronenleitenden Kontaktelektrode 6, auch Außenelektrode genannt, werden die durch den Festelektrolyten 1 wandernden Sauerstoffionen in Sauerstoffatome und Elektronen umgewandelt. Die dabei entstehende Spannung wird im vorliegenden Fall durch das aus elektronenleitendem Werkstoff bestehende Außenschutzrohr 7 zum nicht dargestellten Meßgerät weitergeleitet, wozu die Außenelektrode einerseits mit der Außenoberfläche des Festelektrolyten 1 und andererseits mit der inneren Oberfläche des Schutzrohrs 7 verbunden ist. Als Meßwert wird eine Spannung in Millivolt mV erhalten, welche die Kohlenstoff-Übertragungseigenschaften einer Ofenatmosphäre repräsentiert und zur Regelung des C-Pegels von Aufkohlungsatmosphären verwendet werden kann. Zwischen der Außenelektrode 6 und dem Meßelektrolyt 1 ist ein Ausgleichselektrolyt 12 angeordnet, der aus einem Rohrabschnitt des Meßelektrolyten 1 besteht. Der Rohrabschnitt ist an der Berührungsfläche zum Meßelektrolyten abgerundet, um eine gute Formanpassung zu gewährleisten. Zwischen dem Ausgleichselektrolyten 12 und der Kontaktelektrode 6 befindet sich eine Edelmetallscheibe 13, die Teil der Kontaktelektrode darstellt. Im übrigen entspricht die Sauerstoffsonde der Fig. 1 den nachfolgend beschriebenen Ausführungsformen der Fig. 2 und 3, auf die zur Erläuterung verwiesen wird.

In Fig. 2 der Zeichnung ist die erfindungsgemäße Sauerstoffsonde schematisch dargestellt. Bei ihr ist ein Ausgleichselektrolyt 8 zwischen dem Meßelektrolyten 1 und der Außenelektrode angeordnet, welcher somit in Verbindung steht mit dem Meßelektrolyten, der Außenelektrode und der Ofenatmosphäre. Der Ausgleichselektrolyt 8 besteht aus einem ausschließlich Sauerstoffionen leitenden Werkstoff. Vorteilhafterweise wird als Material Zirkondioxid mit Zusätzen an Y₂O₃, CaO und/oder MgO verwendet. Die elektronenleitende Kontaktelektrode in der Ofenatmosphäre 6 ist aus einem in einer Aufkohlungsatmosphäre im Temperaturbereich von 800 bis 1000° C beständigen Werkstoff hergestellt. Im Ausführungsbeispiel besteht die Außenelektrode 6 aus Gold bzw. einer vorwiegend Gold enthaltenden Legierung. Erfolgreich verwendbar sind aber auch die Edelmetalle der Platingruppe, Silber, Kupfer und Legierungen dieser Metalle. Gold als Werkstoff im Ausführungsbeispiel ist gewählt worden, da hiermit die geringste Chemisorption von Sauerstoffatomen oder -molekülen erzielt wird. Es besitzt darüber hinaus eine sehr hohe chemische Beständigkeit, so daß eine außerordentlich genaue Messung über eine sehr hohe Lebensdauer erzielbar ist.

Fig. 3 der Zeichnung zeigt eine weitere Ausführungsform der erfindungsgemäßen Sauerstoffsonde mit der Anordnung eines zusätzlichen Ausgleichselektrolyten 9 im Referenzmittel. Er besteht aus dem gleichen Material wie der Ausgleichselektrolyt 8 und ist zwischen der Innenelektrode 4 und dem Meßelektrolyten 1 derart angeordnet, daß er in Verbindung steht mit der elektronenleitenden Kontaktelektrode 4 einerseits, der Innenfläche des Meßelektrolyten 1 andererseits sowie dem Referenzmittel Luft. Der zusätzliche Ausgleichselektrolyt 9 besteht aus dem gleichen Werkstoff wie der Ausgleichselektrolyt 8. Für die Wirksamkeit ist wesentlich, daß die Ausgleichselektrolyten aus einem ausschließlich Sauerstoffionen leitenden Werkstoff bestehen.

Durch die Anwendung des Ausgleichselektrolyten 9 auf der Referenzseite mit Luft als Referenzmittel kann mit Vorteil Chrom-Nickelstahl als elektronenleitenden Kontaktelektrode 4 und/oder 6 verwendet werden, ohne daß Nachteile hinsichtlich der Meßgenauigkeit in Kauf genommen werden müssen. Hierdurch kann die Sauerstoffsonde in ihrer Gesamtheit technisch einfacher und wirtschaftlicher hergestellt werden. Bei der Erfindung wurde erstmals der störende Einfluß der Elektrodenreaktion zwischen Sauerstoffionen und Gasen der Ofenatmosphäre auf das Meßsystem der Sauerstoffsonde erkannt und beseitigt.

Die dargestellten Sauerstoffsonden sind zur Regelung der Kohlenstoffübertragung von in den Ofenraum von Wärmebehandlungsöfen eingeführten Brennstoff-Luftgemischen geeignet, wobei der Meßwert dieser Sonden bei bekanntem CO-Gehalt die Kohlenstoffaktivität der Ofenatmosphäre repräsentiert, einer Größe, die zur Regelung der Kohlenstoffübertragung besser geeignet ist, als der üblicherweise hierzu herangezogene Kohlenstoffpegel. Bei der Regelung von Aufkohlungsatmosphären wird die Genauigkeit der Kohlenstoffübertragung insbesondere bei hohen Ofentemperaturen verbessert. Dabei wirkt sich besonders vorteilhaft aus, daß die Kontaktelektrode keinen Kohlenstoff chemisorbiert und die Sonde somit nahe an der Rußgrenze richtige Meßwerte liefert. Hieraus ergibt sich, daß die Kohlenstoffübertragung bei höheren Kohlenstoffaktivitäten der Ofenatmosphäre vorgenommen werden kann als bisher, womit eine Verkürzung der Aufkohlungszeiten erzielbar ist. Darüber hinaus ist die erzielte schnellere Anzeige des Meßwertes nach Veränderungen der Ofenatmosphäre von Vorteil, beispielsweise wenn nach einem Aufkohlungsvorgang der Diffusionsprozeß beginnt.

### Bezugszeichenliste

1 Rohrförmiger Festelektrolyt
2 Referenzmittel
3 Rohr
4 Kontaktelektrode
5 Ofenatmosphäre
6 Kontaktelektrode
7 Schutzrohr
8 Ausgleichselektrolyt
9 Ausgleichselektrolyt
10 Querbohrungen
11 Querbohrungen
12 Ausgleichselektrolyt rohrförmig
13 Edelmetallscheibe

## Patentansprüche

1. Sonde zur Messung des Sauerstoffpotentials einer Ofenatmosphäre, insbesondere zur Ermittlung der Kohlenstoff-Übertragungseigenschaften einer Ofenatmosphäre mit Anteilen der Gase H₂, CO und CH₄, die einen Sauerstoffionen leitenden Festkörperelektrolyten mit einer Kontaktelektrode in der Ofenatmosphäre und einer Kontaktelektrode in einem Referenzmittel mit bekanntem Sauerstoffpotential aufweist,
**dadurch gekennzeichnet,**
daß zwischen der Kontaktelektrode (6) in der Ofenatmosphäre und dem Meßelektrolyten (1) ein Sauerstoffionen leitender Ausgleichselektrolyt (8,12) in Form eines separaten festen Körpers angeordnet ist, der in Berührung steht mit dem Meßelektrolyten (1) einerseits und der Kontaktelektrode (6) andererseits und der aus einem Sauerstoffionen leitenden Werkstoff besteht.

2. Sonde nach Anspruch 1, dadurch gekennzeichnet, daß der Aus
gleichselektrolyt (8) sowohl mit dem Meßelektrolyten als auch mit der Ofenatmosphäre in Berührung steht.

3. Sonde nach Anspruch 1 und 2, dadurch gekennzeichnet, daß zwischen der elektronenleitenden Kontaktelektrode im Referenzmittel (4) und dem Meßelektrolyt (1) ein weiterer ausschließlich Sauerstoffionen leitender Ausgleichselektrolyt (9) angeordnet ist.

4. Sonde nach einem der Ansprüche 1 bis 3, dadurch gekennzeichnet, daß der Ausgleichselektrolyt (8,9,12) ein kubischer oder zylindrischer Körper aus ZrO₂ ist.

5. Sonde nach Anspruch 4, dadurch gekennzeichnet, daß der Ausgleichselektrolyt (12) aus einem Zylinderabschnitt eines rohrförmigen Meßelektrolyten (1) besteht und mit seiner einen Stirnseite an dem Meßelektrolyten (1) anliegt und mit seiner anderen Stirnseite über eine Zwischenscheibe (13) aus einem Edelmetall mit der Kontaktelektrode (6) in der Ofenatmosphäre verbunden ist.

6. Sonde nach einem der Ansprüche 1 bis 5, dadurch gekennzeichnet, daß der Ausgleichselektrolyt (8 bzw. 9 bzw. 12) aus einem identischen Werkstoff wie der Meßelektrolyt (1), vorzugsweise aus Zirkondioxid, gegebenenfalls mit Zusätzen an Y₂O₃, CaO und/oder MgO besteht.

7. Sonde nach einem der Ansprüche 1 bis 6, dadurch gekennzeichnet, daß die elektronenleitende Kontaktelektrode (6) in der Ofenatmosphäre aus Gold oder einer vorwiegend goldenthaltenden Legierung besteht.

8. Sonde nach einem der Ansprüche 1 bis 7, dadurch gekennzeichnet, daß die elektronenleitende Kontaktelektrode (6) in der Ofenatmosphäre aus einem Halbleiter, vorzugsweise Siliziumcarbid, besteht.

9. Sonde nach einem der Ansprüche 1 bis 8, dadurch gekennzeichnet, daß die elektronenleitende Kontaktelektrode im Referenzmittel (4) aus einem hitzebeständigen Chrom-Nickelstahl besteht.

10. Verwendung einer Sauerstoffsonde nach einem der Ansprüche 1 bis 9 als Regelgröße zur Regelung der Kohlenstoffübertragung in Öfen zur Wärmebehandlung von Stahl- und Eisenwerkstücken.

## Claims

1. A probe for measuring the oxygen potential of a furnace atmosphere, especially to determine the carbon-transfer properties of a furnace atmosphere containing the gases H₂, CO, and CH₄, with said probe having an oxygen ion conducting, solid measuring-electrolyte with a contact electrode in said furnace atmosphere and a contact electrode in a reference medium that has a known oxygen potential,
characterised in that,
an oxygen ion conductive compensation electrolyte 8, 12 in the form of separate solid means disposed between the contact electrode 6 in the furnace atmosphere and the measuring electrolyte 1, with said compensation electrolyte means being in contact with both said measuring electrolyte 1 on one side and said contact electrode 6 on the other side and comprising an oxygen ion conducting material.

2. A probe according to claim 1, characterised in that said compensation electrolyte means 8 is in contact with the measuring electrolyte as well as with the furnace atmosphere.

3. A probe according to claim 1 or 2, characterised in that a further compensation electrolyte means 9 that conducts exclusively oxygen ions is disposed between said measuring electrolyte 1 and said electron conducting contact electrode in the reference means 4.

4. A probe according to any one of claims 1 to 3, characterised in that the compensation electrolyte means 8, 9, 12 is a cubic or cylindrical body of ZrO₂.

5. A probe according to claim 4, characterised in that the compensation electrolyte means 12 is a cylindrical portion of a tubular formed measuring electrolyte 1, with said compensation electrolyte means having one end that rests against said measuring electrolyte 1 and its other end connected, via the interposition of an intermediate plate of precious metal, with the contact electrode in the furnace atmosphere.

6. A probe according to any one of claims 1 to 5, characterised in that the compensation electrolyte means (8, 9, or 12 respectively) is made of the same material as is said measuring electrolyte, preferably of zirconium oxide if applicable with the addition of Y₂O₃, CaO and/or MgO. .

7. A probe according to any one of claims 1 to 6, characterised in that the contact electrode in said furnace atmosphere is made of gold or an alloy predominantly comprising gold.

8. A probe according to any one of claims 1 to 7, characterised in that the electron conductive contact electrode in the furnace atmosphere comprises a semi-conductor, preferably silicon carbide.

9. A probe according to any one of claims 1 to 8, characterised in that the electron-conductive contact electrode in the reference material 4 is made of a heat-resistant chromium-nickel steel.

10. Use of a probe according to any one of claims 1 to 9, as a regulating parameter to regulate the carbon transfer in heat-treatment furnaces for steel and iron workpieces.

## Revendications

1. Sonde destinée à la mesure du potentiel oxygène d'une atmosphère de four, en particulier à la détermination des propriétés de transfert de carbone d'une atmosphère de four contenant des gaz H₂, CO et CH₄, laquelle comporte un électrolyte solide de mesure conducteur d'ions oxygène avec une électrode de contact placée dans l'atmosphère du four et une électrode de contact placée dans un agent de référence à potentiel oxygène connu, caractérisée en ce que, entre l'électrode de contact (6) placée dans l'atmosphère du four et l'électrolyte de mesure (1), il est disposé un électrolyte de compensation conducteur d'ions oxygène (8, 12) sous forme d'un corps solide séparé, qui est en contact avec l'électrolyte de mesure (1) d'une part, et l'électrode de contact (6) d'autre part, et qui est composé d'un matériau conducteur d'ions oxygène.

2. Sonde selon la revendication 1, caractérisée en ce que l'électrolyte de compensation (8) est non seulement en contact avec électrolyte de mesure, mais aussi avec l'atmosphère du four.

3. Sonde selon l'une des revendications 1 ou 2, caractérisée en ce qu'un autre électrolyte de compensation (9) exclusivement conducteur d'ions oxygène est disposé entre l'électrode de contact conductrice d'électrons placée dans l'agent de référence (4) et l'électrolyte de mesure (1).

4. Sonde selon l'une quelconque des revendications 1 à 3, caractérisée en ce que l'électrolyte de compensation (8, 9, 12) est un corps cubique ou cylindrique en ZrO₂.

5. Sonde selon la revendication 4, caractérisée en ce que l'électrolyte de compensation (12) est constitué d'un segment cylindrique d'un électrolyte de mesure tubulaire (1) et prend appui contre l'électrolyte de mesure (1) par l'une de ses faces frontales, tandis que par l'autre de ses faces frontales, il est relié à l'électrode de contact (6) placée dans l'atmosphère du four par l'intermédiaire d'une rondelle d'une certaine épaisseur (13) en métal précieux.

6. Sonde selon l'une quelconque des revendications 1 à 5, caractérisée en ce que l'électrolyte de compensation (8 ou 9 ou 12) est composé d'un matériau identique à celui de l'électrolyte de mesure (1), de préférence du dioxyde de zirconium, le cas échéant avec des additifs de Y₂O₃, CaO et/ou MgO.

7. Sonde selon l'une quelconque des revendications 1 à 6, caractérisée en ce que l'électrode de contact conductrice d'électrons (6) placée dans l'atmosphère du four est composée d'or, ou d'un alliage contenant majoritairement de l'or.

8. Sonde selon l'une quelconque des revendications 1 à 7, caractérisée en ce que l'électrode de contact conductrice d'électrons (6) placée dans l'atmosphère du four est composée d'un semi-conducteur, de préférence du carbure de silicium.

9. Sonde selon l'une quelconque des revendications 1 à 8, caractérisée en ce que l'électrode de contact conductrice d'électrons placée dans l'agent de référence (4) est composée d'un acier au chrome-nickel résistant à la chaleur.

10. Utilisation en tant que paramètre de réglage d'une sonde d'oxygène, selon l'une quelconque des revendications 1 à 9, pour régler le transfert de carbone dans des fours de traitement thermique de pièces en acier ou en fer.
